# EUROPÄISCHE PATENTSCHRIFT

(11) **EP 0 623 766 B1**
(45) Veröffentlichungstag und Bekanntmachung des Hinweises auf die Patenterteilung: **20.03.1996**
(21) Anmeldenummer: 94106316.6
(22) Anmeldetag: 22.04.1994
(51) Int. Cl.: F16H 7/02, A01D 34/68, A01D 34/76

(54) **Riementrieb zur Leistungsübertragung von einem Fahrzeug zu einem an diesem höhenbeweglich angeschlossenen Gerät**
Belt drive for power transmission from a vehicle to a thereto connected device adjustable in height
Transmission de puissance par courroie entre un véhicule et un appareil réglable en hauteur, relié à ce véhicule

(30) Priorität: 05.05.1993 US 57723
(43) Veröffentlichungstag der Anmeldung: 09.11.1994
(73) Patentinhaber: DEERE & COMPANY, Moline, Illinois 61265 (US)
(72) Erfinder: Hohnl, Gary David, Slinger, Wisconsin 53086 (US)
(74) Vertreter: Feldmann, Bernhard

(56) Entgegenhaltungen:
- EP-A- 0 445 623
- US-A- 2 691 421
- US-A- 3 464 282
- US-A- 3 969 876

## Beschreibung

Die Erfindung bezieht sich auf einen Riementrieb zur Leistungsübertragung von einem Fahrzeug zu einem an dem Fahrzeug höhenbeweglich angeschlossenen Gerät mit einem von dem Fahrzeug aus antreibbaren Primärriemen, einem mindestens eine am Gerät angeordnete Antriebsscheibe antreibenden Sekundärriemen und einer Primärriemen und Sekundärriemen miteinander verbindenden Übersetzungsscheibe, wobei eine Scheibe der Übersetzungsscheibe von den Primärriemen und der Sekundärriemen über eine zweite Scheibe an der Übersetzungsscheibe antreibbar ist.

Dieser bekannte Riementrieb (EP-A1-0 445 623) dient zum Antrieb eines an einem in der Garten- und Grundstückspflege einsetzbaren Fahrzeug angebauten Rasenmähers. Anstelle des Rasenmähers können auch andere Geräte angeschlossen werden, wie ein Laubsauger, eine Kehrmaschine oder eine Schneefräse, um nur einige zu nennen. Alle diese Geräte haben antreibbare Komponenten. Im Einsatz folgen solche Geräte der Bodenkontur und führen bei Bodenunebenheiten vertikale Relativbewegungen zum Fahrzeug aus. Im Falle eines Rasenmähers, der zwischen den Achsen des Fahrzeuges oder hinter der Fahrzeughinterachse angebaut sein kann oder vor dem Fahrzeug hergeschoben wird, kann die Schnitthöhe in vorgegebenen Grenzen noch manuell eingestellt werden. Ist der Rasenmäher als Sichelmäher ausgebildet, so weist das Mähwerksgehäuse in der Regel mehrere um vertikale Wellen umlaufende Mähmesser auf, wobei sich die Messerwellen durch die Oberseite des Mähwerksgehäuses erstrecken, dort mit Messerantriebsscheiben fest verbunden sind und über einen endlosen Sekundärriemen angetrieben werden. Riemenleitscheiben, die auch zur Riemenspannung dienen, sind ebenfalls noch vorgesehen. Der Antrieb des Sekundärriemens erfolgt meistens über einen Primärriemen, der von einer vom Fahrzeugmotor aus antreibbaren Ausgangsscheibe angetrieben wird. Hierbei kann sich der Fahrzeugmotor je nach Fahrzeugbauart vorne oder hinten am Fahrzeug befinden. In fast allen Fällen befindet sich aber die mit Bezug auf das Fahrzeug nicht höhenbeweglich angeordnete Ausgangsscheibe in einer Höhenlage, die von der Höhenlage der mit dem Mähwerksgehäuse höhenverstellbaren Lage der Messerantriebsscheiben abweicht. Dieser Höhenabstand wird über eine Übersetzungsscheibe überbrückt, die bei dem bekannten Riementrieb auf der Oberseite des Mähwerksgehäuses angeordnet ist, ihren Antrieb von dem Primärriemen erhält und für den Antrieb des Sekundärriemens eine zweite Riemenscheibe aufweist, die in derselben Ebene wie die Messerantriebsscheiben liegt, d. h. zu diesen fluchtend angebracht ist und in einer Ebene umläuft, die zu der der ersten Riemenscheibe parallel verläuft. Bei einer Veränderung der Höhenlage des Mähwerksgehäuses, sei es manuell oder durch Auftreffen auf Bodenunebenheiten, ändert sich damit die Winkellage des Sekundärriemens nicht, wohl aber die des Primärriemens, da sich die vertikalen Abstandsverhältnisse zwischen der Ausgangsscheibe und der von dem Primärriemen angetriebenen und an der Übersetzungsscheibe vorgesehenen weiteren Riemenscheibe ändern. Dies wiederum führt zu einem Ausbiegen nach oben oder unten des Primärriemens, und je näher die Ausgangsscheibe an der Übersetzungsscheibe liegt, um so größer ist die Änderung der Winkellage des Primärriemens. Bei zu großen Winkeländerungen kann der Riemen keine Kraft mehr übertragen oder springt sogar ab. In jedem Fall aber tritt ein Riemenverschleiß auf, der um so größer ist, je größer die Winkeländerung ist. Bei zu großem Verschleiß muß der Riemen ersetzt werden, was bei großen Winkeländerungen sehr schnell der Fall sein kann.

Die Erfindung sieht nun einen Riementrieb vor, bei dem der Riemenverschleiß zumindest reduziert wird, wozu vorgesehen ist, daß zumindest die Scheibe der Übersetzungsscheibe, um die der Primärriemen umläuft, in Ebenen verstellbar ist, die die Rotationsebene der Antriebsscheibe schneiden. Auf diese Weise kann sich die Scheibe der Winkellagenänderung zumindest teilweise anpassen, wodurch die Riemenausbiegung geringer ist und weniger oder gar kein nennenswerter Verschleiß auftritt. Hierzu kann die entsprechende Scheibe oder können beide Scheiben beispielweise kugelpfannenähnlich aber drehfest auf der Welle der Übersetzungsscheibe aufsitzen.

Von Vorteil ist es jedoch, daß beide Scheiben mit der Übersetzungsscheibe fest verbunden sind, weshalb erfindungsgemäß die Übersetzungsscheibe mit ihrer Längsachse kippbar am Gerät angeordnet sein kann, oder mit dem Fahrzeug schwenkbar verbunden sein kann oder mit ihrer Längsachse kippbar am Gerät angeordnet und mit dem Fahrzeug schwenkbar verbunden sein kann. Auf diese Weise paßt sich die Übersetzungsscheibe in ihrer Gesamtheit bei einer Höhenveränderung einer sich ändernden Winkellage des Primärriemens teilweise an, wobei jedoch wegen der Kipp- und/oder der Schwenkverbindung die Winkellagenänderung wesentlich geringer ist, als bei einer ortsfesten Anordnung der Übersetzungsscheibe.

Bei einer Höhenverstellung wird die Übersetzungsscheibe zwar durch den Primär- und Sekundärriemen in ihrer jeweiligen Schrägstellung gehalten, jedoch kann es für eine sichere Führung angebracht sein, daß die Übersetzungsscheibe mit dem Gerät und/oder mit dem Fahrzeug zusätzlich über eine Schubverbindung verbunden ist.

Wenn nach einem weiteren Vorschlag der Erfindung die Übersetzungsscheibe zwischen einer den Primärriemen antreibenden Ausgangsscheibe und dem Gerät angeordnet ist, tritt bei einer Höhenverstellung eine Winkellagenänderung der Riemen zwischen der Ausgangsscheibe und der ersten fest an dem Gerät vorgesehenen Riemenscheibe auf, so daß die effektive Länge, auf der eine Riemenverstellung stattfindet, vergrößert wurde, wodurch eine Winkeländerung weiter reduziert wird.

Zweckmäßig ist bei einem Gerät, das an dem Fahrzeug um eine horizontale Achse schwenkbar angeschlossen ist, die Kippverbindung der Übersetzungsscheibe mit dem Gerät vor oder rückwärtig der horizontalen Achse und die Schwenkverbindung rückwärtig oder vor der horizontalen Achse vorgesehen.

Im einzelnen kann ein die Übersetzungsscheibe drehbar aufnehmender Tragteil am Gerät vertikal schwenkbar angeschlossen sein und einen Armteil aufweisen, der an das Fahrzeug verschiebbar und vertikal schwenkbar angeschlossen ist. Damit sind die Schwenk- und Schubverbindungen miteinander kombiniert, wobei die Übersetzungsscheibe noch mit dem Tragteil horizontal schwenkbar verbunden sein kann, um sich noch besser den Riemenänderungen anpassen zu können.

In der Regel können die eingangs genannten Geräte gegenüber dem Fahrzeug eine Höhenstellung einnehmen, in der der Primärriemen und der Sekundärriemen in zwei zueinander parallelen horizontalen Ebenen umlaufen, weshalb die Erfindung ferner vorsieht, daß die Übersetzungsscheibe derart am Gerät und Fahrzeug angeschlossen ist, daß bei einem Anheben des Gerätes aus dieser Höhenstellung die Übersetzungsscheibe in einer vertikalen Ebene in Richtung auf die den Primärriemen antreibende Ausgangsscheibe kippt und bei einem Absenken aus dieser Höhenstellung in entgegengesetzter Richtung. Damit wird bei einer Höhenverstellung des Gerätes die Übersetzungsscheibe in einem geringeren Maße höhenverstellt, wodurch sich wiederum die endlosen Riemen weniger stark ausbiegen.

In der Zeichnung ist ein nachfolgend näher erläutertes Ausführungsbeispiel der Erfindung dargestellt. Es zeigt:
- Fig. 1: einen Frontmäher in perspektivischer Darstellung,
- Fig. 2: einen Riemenantrieb für den Frontmäher, wobei sich das Mähwerksgehäuse in einer relativ hohen Schnittstellung befindet,
- Fig. 3: das Mähwerksgehäuse mit Sekundärriemen in der Draufsicht,
- Fig. 4: eine ähnliche Ansicht, wie Fig. 2, jedoch das Mähwerksgehäuse in einer mittigen Stellung zeigend, in der Primär- und Sekundärriemen zueinander parallel verlaufen und
- Fig. 5: eine an das Fahrzeug und an das Mähwerksgehäuse anschließbare Übersetzungsscheibe mit Tragteil.

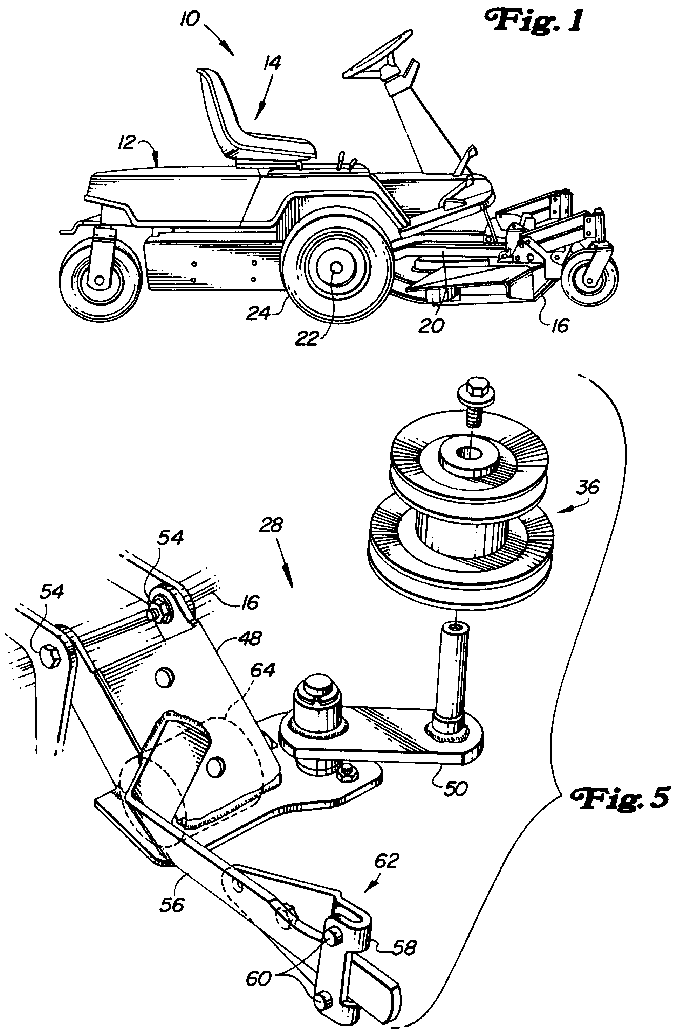

In Fig. 1 der Zeichnung ist ein Fahrzeug in Form eines Kleinschleppers, wie er in der Rasen- und Grundstückspflege eingesetzt wird, mit 10 bezeichnet. Der Kleinschlepper ist deshalb mit einem mit ihm höhenverstellbar verbundenen Rasenmäher ausgerüstet, der von dem Kleinschlepper aus über einen nachfolgend noch im einzelnen zu beschreibenden Riementrieb angetrieben wird.

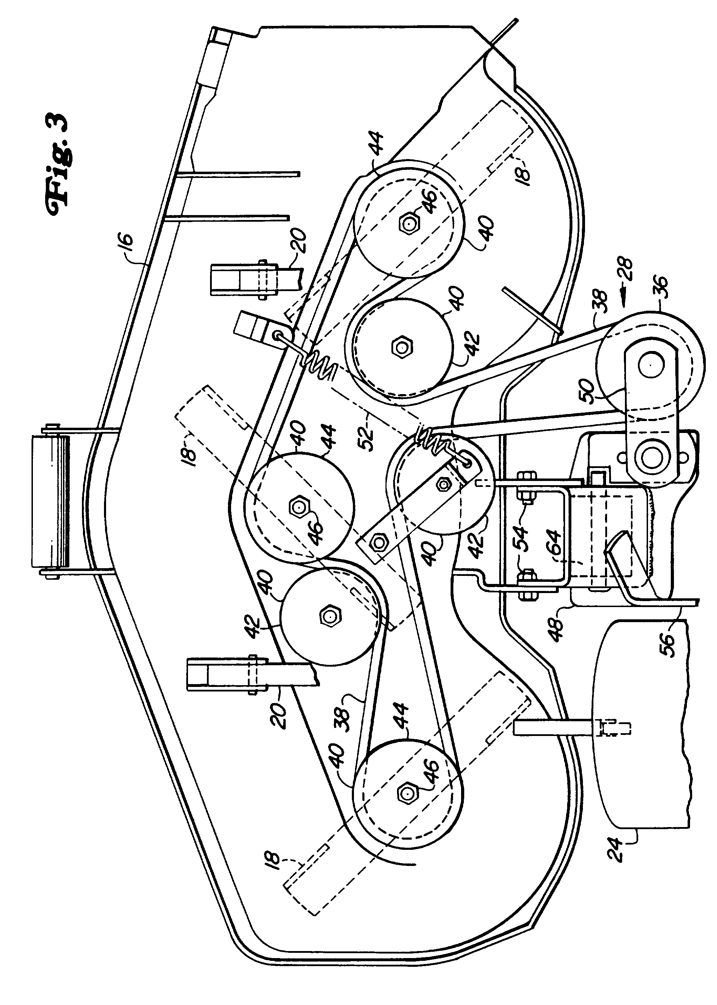

Am rückwärtigen Ende des Fahrzeuges befindet sich eine Kraftquelle 12, beispielsweise ein Verbrennungsmotor, die damit hinter einem Bedienungsstand 14 auf dem Kleinschlepper vorgesehen ist. Am vorderen Ende des Schleppers ist ein Mähwerksgehäuse 16 angelenkt, das im Einsatz vor dem Schlepper hergeschoben wird, sich auf vorderen Laufrädern abstützt und in Fig. 3 erkennbare Mähmesser 18 aufnimmt. Im Einsatz laufen die Mähmesser um vertikale Achsen um, um bei Vorwärtsfahrt des Kleinschleppers Rasen oder andere Vegetation schneiden zu können. Das Mähwerksgehäuse 16, ist über Schubarme 20 an das Fahrzeug 10 angelenkt, die im Bereich einer Vorderachse 22 für die vorderen Fahrzeuglaufräder 24 an das Fahrzeug schwenkbar angeschlossen sind. Die derart gebildete Schwenkverbindung 26 ermöglicht es dem Mähwerksgehäuse 16 gegenüber dem Fahrzeug vertikale Relativbewegungen auszuführen, insbesondere wenn über Bodenunebenheiten gefahren werden muß.

In herkömmlicher und deshalb in der Zeichnung auch nicht dargestellter Art ist das Mähwerksgehäuse 16 zum Variieren der Schnitthöhe höhenverstellbar angeordnet. Die Höheneinstelleinrichtung erlaubt es einer Bedienungsperson u. a., unterschiedliche Schnitthöhen einzustellen, wobei das Mähwerksgehäuse und damit die Mähmesser in den unterschiedlichen Höheneinstellungen immer in zueinander parallel verlaufenden Horizontalebenen verstellt wird bzw. umlaufen. Eine derartige Höheneinstellung findet sich zum Beispiel an den John Deere F525 Frontmähern.

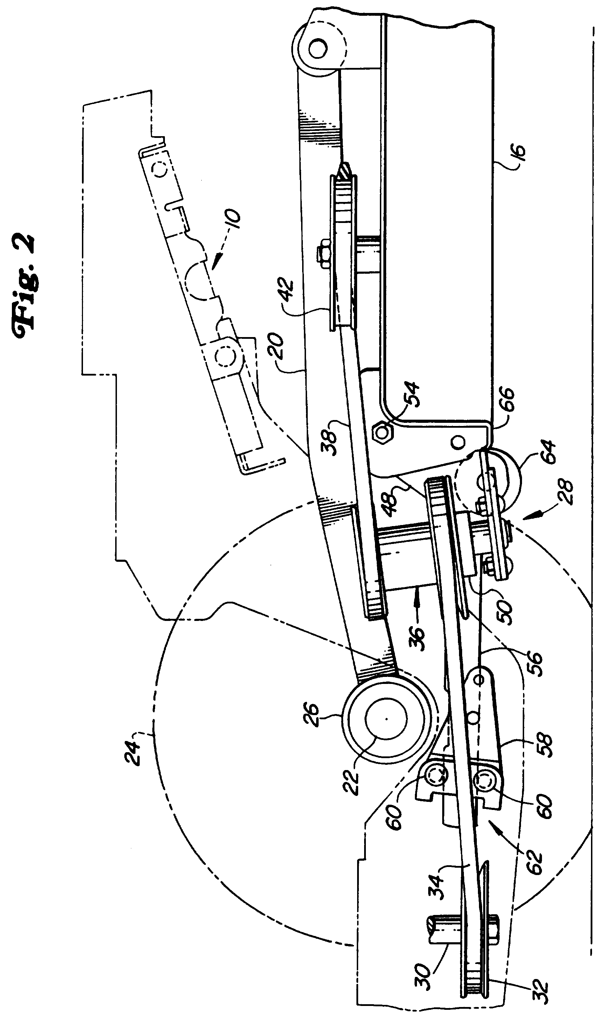

Beim bevorzugten Ausführungsbeispiel ist das Mähwerksgehäuse mit drei Mähmessern 18 ausgerüstet, und diese werden von dem Verbrennungsmotor 12 aus über eine in den Fig. 2 bis 5 erkennbare Riemengetriebeeinrichtung 18 angetrieben. Im einzelnen erstreckt sich, wie aus Fig. 2 erkennbar ist, vom Verbrennungsmotor 12 aus eine vertikal verlaufende Ausgangswelle 30 nach unten, an deren unterem Ende eine Ausgangsscheibe 32 fest angeordnet ist. Die Ausgangsscheibe ist damit von dem Verbrennungsmotor aus antreibbar und treibt einen endlosen Primärriemen 34 an, der anderenends um die untere Scheibe einer zwei Riemenscheiben aufweisenden Übersetzungsscheibe 36 verläuft und diese antreibt. Von der oberen Scheibe der Übersetzungsscheibe 36 aus wird ein endloser Sekundärriemen 38 angetrieben, der, wie am besten aus Fig. 3 erkennbar ist, um eine Vielzahl von Riemenscheiben 40 geführt ist. Zu diesen gehören auf dem Mähwerksgehäuse 16 angeordnete Riemenleitscheiben 42, von denen eine auch als Spannscheibe für den Sekundärriemen 38 ausgebildet ist. Zu den Riemenscheiben 40 gehören ferner die Mähmesserantriebsscheiben 44, die mit vertikal verlaufenden Messerspindeln 66 fest verbunden sind. Die Mähmesserantriebsscheiben 44 befinden sich in derselben Horizontalebene wie die Riemenleitscheiben, wobei die Messerspindeln 46 sich durch das Mähwerksgehäuse 16 nach unten erstrecken und an ihren unteren Enden die Mähmesser 18 aufnehmen. Damit können die Mähmesser durch die Riemengetriebeeinrichtung 28 angetrieben werden. Bei von dem Verbrennungsmotor 12 aus angetriebener Ausgangsscheibe 32 wird deren Drehbewegung über den Primärriemen 32, die Übersetzungsscheibe 36, den Sekundärriemen 38 und die Mähmesserantriebsscheiben 44 sowie deren Spindeln 46 auf die Mähmesser 18 übertragen.

Die Riemengetriebeeinrichtung 28 ist derart gestaltet, daß bei Ausweich- oder Relativbewegungen des Mähwerksgehäuses bzw. bei einem Höhenverstellen des Mähwerksgehäuses sich die Winkellage des Primärriemens und/oder des Sekundärriemens nicht extrem verändert. Hierdurch wird eine bessere Kraftübertragung erreicht und ein übermäßiger Verschleiß verhindert. Hierzu ist die Übersetzungsscheibe nicht nur um eine vertikale Achse schwenkbar sondern auch um eine horizontale Achse kippbar angeordnet. Wie im einzelnen aus den Fig. 2 bis 5 ersehen werden kann, ist zwischen dem Mähwerksgehäuse 16 und dem Fahrzeug 10 ein Tragteil 48 vorgesehen. An diesen Tragteil 48 ist ein am besten in Fig. 5 erkennbarer Schwenkarm 50 horizontal schwenkbar angeschlossen, der die Übersetzungsscheibe 36 um eine vertikale Achse drehbar aufnimmt. Der Tragteil 48 und der Schwenkarm 50 tragen damit die Übersetzungsscheibe 36 zwischen dem Mähwerksgehäuse 16 und dem Fahrzeug 10. Die als Spannscheibe ausgebildete Riemenleitscheibe 42 ist auf einem in Fig. 3 dargestellten Schwenkarm angeordnet und steht derart unter der Spannung einer Feder 52, daß der Sekundärriemen 38 gespannt bleibt. Da der Sekundärriemen auch um die Übersetzungsscheibe 36 geführt ist, bewirkt die Feder 52 außerdem, daß der Schwenkarm 50 mit der Übersetzungsscheibe 36 in Richtung auf das Mähwerksgehäuse 16 oder nach vorne verschwenkt oder in diese Richtung gezogen wird, wodurch wiederum der Primärriemen 34 gespannt wird. Eine Scharnierkupplung oder eine erste Schwenkverbindung 54, die ebenfalls in Fig. 5 am besten zu erkennen ist, schließt den Tragteil 48 an das Mähwerksgehäuse 16 an. Durch diese Schwenkverbindung 54 entsteht eine im wesentlichen horizontal und seitlich verlaufende Achse, um die der Tragteil 48 mit Bezug auf das Mähwerksgehäuse 16 schwenken kann, wenn das Mähwerksgehäuse 16 vertikal verstellt wird.

Eine in den Fig. 2, 4 und 5 eingezeichnete zweite Schwenkverbindung 62 dient zum Anschließen des Tragteils 48 an das Fahrzeug 10. Sie besteht im wesentlichen aus einen Armteil 56, der starr mit dem Tragteil 48 verbunden ist und sich von diesem aus gesehen nach rückwärts erstreckt, und aus einem Befestigungsteil 58, der rückwärtig des Tragteils 48 an das Fahrzeug 10 angeschlossen ist und zwei Stifte 60 aufweist, die zur verschiebbaren Aufnahme des rückwärtigen Abschnittes des Armteils 56 als Lagerrollflächen dienen. Gegebenenfalls kann der Befestigungsteil 58 hierzu an seinem einen Ende U-förmig gerollt sein, wobei die Stifte die beiden Schenkel durchsetzen und in dem Steg eine entsprechende Schlitzöffnung für den Armteil vorgesehen ist. Die Stifte haben einen gegenseitigen Abstand, der in etwa der Höhe des Armteils entspricht, der noch in diesem Bereich mit einer Auskehlung versehen sein kann. Damit wird der Armteil von den Stiften und dem Befestigungsteil in verschiebbarer Form lose getragen. Der Armteil kann sich somit bei relativen Höhenbewegungen des Mähwerksgehäuses gegenüber dem Fahrzeug in Längsrichtung verschieben und auch noch Auf- und Abbewegungen ausführen, was infolge der Auskehlung oder des Abstandes der Stifte oder der Länge der Schlitzöffnung erreicht wird.

Wenn nun eine Bedienungsperson das Mähwerksgehäuse 16 anhebt, um eine größere Schnitthöhe zu erreichen, dann wird das Mähwerksgehäuse vertikal nach oben mit Bezug auf das Fahrzeug 10 verstellt. Bei einer solchen Verstellung werden auch die Mähwerksgehäusescheiben 40 mit nach oben verstellt, so daß sich ihre Lage mit Bezug auf die Ausgangsscheibe 32 ändert. Gleichzeitig wird bei einer derartigen Verstellung auch die durch die Schwenkverbindung 54 gebildete Achse zusammen mit dem Mähwerksgehäuse 16 nach oben verstellt, so daß auch der vordere an die Schwenkverbindung 54 angeschlossene Abschnitt des Tragteils 48 mit nach oben verstellt wird. Gleichzeitig kippt oder schwenkt der gesamte Tragteil 48 um die Schwenkverbindung 54 nach unten, und zwar in Richtung auf das Mähwerksgehäuse 16, wobei sich der Armteil 56 zwischen den Stiften 60 nach vorne bewegt und leicht nach oben verschwenkt.

Da auch die Übersetzungsscheibe 36 an dem Tragteil 48 angeordnet ist, wird sie bei einer Höhenbewegung des Mähwerksgehäuses 16 in eine Stellung gemäß Fig. 2 ebenfalls mit Bezug auf das Fahrzeug 10 oder die Ausgangsscheibe 32 höhenverstellt. Sie macht aber nicht die gesamte Höhenbewegung des Mähwerksgehäuses 16 mit, da sie rückwärtig der Schwenkverbindung 54 angeordnet ist und deshalb bei einer solchen Höhenbewegung mit Bezug auf das Mähwerksgehäuse 16 nach unten in eine Schräglage verkippt. Damit ist die Höhenverstellung der Übersetzungsscheibe 36 geringer als die des Mähwerksgehäuses 16 und die Übersetzungsscheibe nimmt eine Höhenlage ein, die zwischen der Ausgangsscheibe 32 und den Mähwerksgehäusescheiben 42 liegt. Durch eine solche Positionierung der Übersetzungsscheibe 36 verändern der Primärriemen 34 und der Sekundärriemen 38 ihre Winkellagen nur in tolerierbaren Grenzen, d. h. die Änderung der Winkel mit Bezug auf die Ausgangsscheibe 32 und der Riemenleitscheiben 42 ist sehr gering, wie es aus Fig. 2 erkennbar ist.

Bei herkömmlichen Riemengetriebeeinrichtungen mit einem Primärriemen und einem Sekundärriemen ist die Übersetzungsscheibe am Mähwerksgehäuse fest angeordnet mit der Folge, daß der Sekundärriemen bei einer Höhenverstellung seine Winkellage nicht ändert.

Der gesamte Höhenunterschied muß deshalb bei solchen Riemengetriebeeinheiten von dem Primärriemen aufgefangen werden. Da andererseits die in der Rasen- und Grundstückspflege einsetzbaren Kleinschlepper sehr gedrungener Bauart sind, ist auch die Übersetzungsscheibe mit relativ kurzem Abstand zur Ausgangsscheibe angeordnet und der Primärriemen muß auf diesem kurzen Abstand die Höhendifferenz überwinden, wobei er sich natürlich sehr stark auslenkt. Bei der Riemengetriebeeinrichtung nach der Erfindung dagegen wird der Abstand der Scheiben, zwischen denen eine Höhendifferenz auszugleichen ist, vergrößert, d. h. durch die Anordnung der Übersetzungsscheibe 36 zwischen den Höhenstellungen der Ausgangsscheibe 32 und den Riemenleitscheiben auf dem Mähwerksgehäuse 16 wird der Längsabstand, der den Riemen 34 und 38 zum Überbrücken der Höhenunterschiede zwischen den Scheiben 32 und 42 zur Verfügung steht, effektiv verlängert. Beim bevorzugten Ausführungsbeispiel steht hierzu der gesamte Abstand zwischen der Ausgangsscheibe 32 und der Riemenleitscheiben 42 zur Verfügung, wie es aus Fig. 2 zu ersehen ist. Da dieser Abstand im Vergleich zu den herkömmlichen Riemengetriebeeinheiten relativ groß ist, ist auch die Riemenauslenkung oder die Veränderung der Winkellagen der beiden Riemen relativ klein.

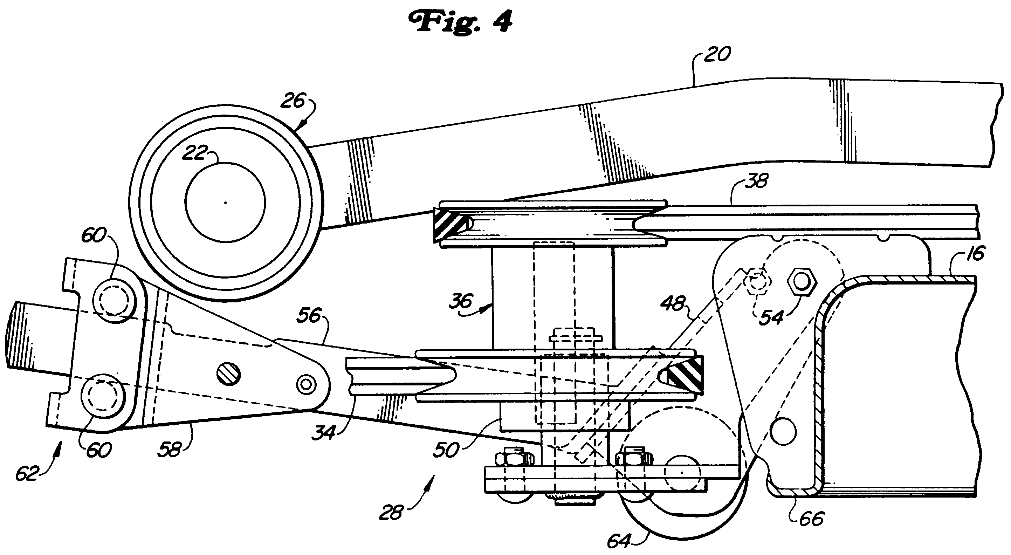

Hinzu kommt noch, daß, wenn das Mähwerksgehäuse angehoben wird, der Tragteil 48 um die Schwenkverbindung 54 verkippt, wobei, wie es in Fig. 2 eingezeichnet ist, die an der Übersetzungsscheibe vorgesehenen Riemenscheiben aus ihrer in Fig. 4 zu ersehenen horizontalen Lage in Richtung auf die Ausgangsscheibe 32 kippen. Dieses Verkippen der Übersetzungsscheibe in einer vertikalen Ebene trägt dazu bei, daß die Riemenscheiben der Übersetzungsscheibe 36 sich stärker zu den Winkellagen der beiden Riemen 34 und 38 ausrichten. Dadurch wiederum werden die Winkellagen des Primärriemens und des Sekundärriemens mit Bezug auf die Riemenscheiben an der Übersetzungsscheibe 36 verkleinert und Abrieb, der infolge von an den Rändern der Riemenscheiben an der Übersetzungsscheibe reibenden Riemen auftreten kann, wird ebenfalls verringert. Es tritt weniger Verschleiß auf.

Beim bevorzugten Ausführungsbeispiel kann die Höhe des Mähwerksgehäuses zwischen 2, 54 cm und 10, 16 cm (1 Zoll und 4 Zoll) eingestellt werden. Bei einer Höheneinstellung von 6, 35 cm (2, 5 Zoll) verlaufen die Riemen in horizontalen Ebenen, und die Riemenscheiben an der Übersetzungsscheibe 36 sind zu der Ausgangsriemenscheibe bzw. zu den Riemenleitscheiben 42 ausgerichtet. Dies ist in Fig. 4 dargestellt. Wird das Mähwerksgehäuse dann aus der Stellung nach Fig. 4 weiter angehoben, dann kippt die Übersetzungsscheibe 36 in Richtung auf die Ausgangsscheibe, wie es vorstehend beschrieben wurde und in Fig. 2 dargestellt ist. Wird das Mähwerksgehäuse 16 andererseits aus seiner in Fig. 4 gezeigten Stellung abgesenkt, dann kippt die Übersetzungsscheibe in entgegengesetzter Richtung, wobei sich wegen des geringeren Höhenunterschiedes die Winkellagen der beiden Riemen kaum ändern, da das Verstellen der Riemenscheiben an der Übersetzungsscheibe 36 aus der horizontalen Lage sehr gering ist.

Bei einem Auftreffen auf Bodenunebenheiten treten zwischen Mähwerksgehäuse 16 und dem Fahrzeug 10 Relativbewegungen auf, wobei sich auch die Schubarme 20 entsprechend verstellen. Aber auch bei solchen Vorgängen werden sich die Winkellagen der beiden Riemen nicht übermäßig verändern. Trifft zum Beispiel das Mähwerk bei Vorwärtsfahrt auf eine Bodenerhebung auf, so verschwenkt das Mähwerksgehäuse 16 zusammen mit den Schubarmen 20 um die Anlenkstelle der Schubarme 20 am Fahrzeug 10 nach oben. Dabei verstellt sich das Mähwerksgehäuse 16 mit Bezug auf die Ausgangsscheibe 32 nach oben und die Winkellagen der beiden Riemen ändern sich in ähnlicher Weise, wie es bei der vorstehend beschriebenen manuellen Höhenänderung erläutert wurde. Die Auslenkungen hängen natürlich von der Höhe der Bodenerhebung ab.

Es wurde bereits darauf verwiesen, daß bei dem bevorzugten Ausführungsbeispiel eine erste und eine zweite Schwenkverbindung 54 und 62 vorgesehen sind, wobei die Schwenkverbindung 54 vor und die Schwenkverbindung 62 hinter dem Schwenkanschluß 26 der Schubarme 20 liegt. Durch eine solche Anordnung wird der Tragteil 48 nach oben schwenken, wenn das Mähwerksgehäuse und die Schubarme bei einem Auftreffen auf eine Bodenerhebung nach oben ausweichen, wobei der Schwenkwinkel jedoch nicht dem des Mähwerksgehäuses oder dem der Schubarme entspricht. Der Tragteil 48 wird eine Winkelstellung einnehmen, die zwischen der horizontalen durch die Ausgangsscheiben 32 verlaufenden Ebene und den geneigten Ebenen der Mähwerksgehäusescheiben 40, des Mähwerksgehäuses 16 und der Schubarme 20 liegt. Durch einen angenommenen mittigen Winkel wird die Übersetzungsscheibe 48 nach dem bevorzugten Ausführungsbeispiel die Unfluchtung zwischen den beiden Riemen 34 und 38 halbieren.

Bei dem bevorzugten Ausführungsbeispiel ist noch eine Rolle 64 vorgesehen, die von dem Tragteil 48 getragen ist und sich nahe der unteren Kante 66 des Mähwerksgehäuses 16 befindet. Wird das Mähwerksgehäuse 16 für eine niedrige Schnitthöhe eingestellt, dann wird die Rolle 64 zusammen mit dem Tragteil 48 nach oben um die Schwenkverbindung 54 verschwenkt und nach oben mit Bezug auf die untere Kante 66 des Mähwerksgehäuses 16. Bei niedrigen Schnitthöhen tritt der äußere untere Umfang der Rolle 64 kaum über die untere Kante des Mähwerksgehäuses nach unten über und behindert dadurch nicht das Arbeiten bei niedrigen Schnitthöhen. Wird andererseits das Mähwerksgehäuse auf große Schnitthöhen eingestellt, dann schwenkt die Rolle 64 mit dem Tragteil 48 um die Schwenkverbindung 54 nach unten und auch nach unten mit Bezug auf die Bodenkante 66 des Mähwerksgehäuses 16. Bei hohen Schnitthöhen steht damit die Rolle 64 beträchtlich über die untere Kante 66 des Mähwerksgehäuses 16 über, wie es in Fig. 2 gezeigt ist, um bei Bodenunebenheiten zu verhindern, daß die untere Kante des Mähwerksgehäuses über den Boden schleift bzw. die Messer in den Boden schneiden, und um andererseits zu erreichen, daß bei einen Überfahren der Kuppe einer Bodenerhebung das Gras dort nicht unerwünscht kurz geschnitten wird. Die Position der Rolle 64 mit Bezug auf die untere Kante des Mähwerksgehäuses 16 wird automatisch miteingestellt, wenn der Tragteil bei einer Höheneinstellung des Mähwerksgehäuses verstellt wird, so daß die Bedienungsperson die Rolle nicht noch manuell einstellen muß. Herkömmliche Mäher haben eine Rolle oder Rollen, deren Position mit Bezug auf die untere Kante des Mähwerksgehäuses feststehend ist. Eine derartige Position ist auf die unterste Schnitthöhe abgestellt. Bei höheren Schnitthöhen verhindern die herkömmlichen Rollen zwar ein Aufschlagen der unteren Kante auf den Boden, aber nicht, daß bei Bodenunebenheiten deren Kuppe unerwünscht kurz geschnitten wird.

## Patentansprüche

1. Riementrieb zur Leistungsübertragung von einem Fahrzeug (10) zu einem an dem Fahrzeug (10) höhenbeweglich angeschlossenen Gerät mit einem von dem Fahrzeug (10) aus antreibbaren Primärriemen (34), einem mindestens eine am Gerät angeordnete Antriebsscheibe (44) antreibenden Sekundärriemen (38) und einer Primärriemen (34) und Sekundärriemen (38) miteinander verbindenden Übersetzungsscheibe (36), wobei eine Scheibe der Übersetzungsscheibe (36) von den Primärriemen (34) und der Sekundärriemen über eine zweite Scheibe an der Übersetzungsscheibe (36) antreibbar ist, dadurch gekennzeichnet, daß zumindest die Scheibe der Übersetzungsscheibe (36), um die der Primärriemen (34) umläuft, in Ebenen verstellbar ist, die die Rotationsebene der Antriebsscheibe (44) schneiden.

2. Riementrieb nach Anspruch 1, wobei die Übersetzungsscheibe (36) am Gerät schwenkbar angeordnet ist, dadurch gekennzeichnet, daß die Übersetzungsscheibe (36) mit ihrer Längsachse kippbar am Gerät angeordnet ist.

3. Riementrieb nach Anspruch 1, dadurch gekennzeichnet, daß die Übersetzungsscheibe (36) mit dem Fahrzeug (10) schwenkbar verbunden ist.

4. Riementrieb nach Anspruch 1, wobei die Übersetzungsscheibe (36) am Gerät schwenkbar angeordnet ist, dadurch gekennzeichnet, daß die Übersetzungsscheibe (36) mit ihrer Längsachse kippbar am Gerät angeordnet und mit dem Fahrzeug (10) schwenkbar verbunden ist.

5. Riementrieb nach einem oder mehreren der vorherigen Ansprüche, dadurch gekennzeichnet, daß die Übersetzungsscheibe (36) mit dem Gerät und/oder mit dem Fahrzeug (10) über eine Schubverbindung verbunden ist.

6. Riementrieb nach einem oder mehreren der vorherigen Ansprüche, wobei der Primärriemen (34) über eine Ausgangsscheibe (32) antreibbar ist, dadurch gekennzeichnet, daß die Übersetzungsscheibe (36) zwischen der Ausgangsscheibe (32) und dem Gerät angeordnet ist.

7. Riementrieb nach einem oder mehreren der vorherigen Ansprüche, wobei das Gerät an dem Fahrzeug (10) um eine horizontale Achse (22) schwenkbar angeschlossen ist, dadurch gekennzeichnet, daß die Kippverbindung (54) der Übersetzungsscheibe (36) mit dem Gerät vor oder rückwärtig der horizontalen Achse (22) und die Schwenkverbindung (62) mit dem Fahrzeug (10) rückwärtig oder vor der horizontalen Achse (22) vorgesehen ist.

8. Riementrieb nach einem oder mehreren der vorherigen Ansprüche, wobei die Übersetzungsscheibe (36) auf einem Tragteil (48) drehbar angeordnet ist, dadurch gekennzeichnet, daß der Tragteil (48) am Gerät vertikal schwenkbar angeschlossen ist und einen Armteil (56) aufweist, der an das Fahrzeug (10) verschiebbar und vertikal schwenkbar angeschlossen ist.

9. Riementrieb nach Anspruch 8, dadurch gekennzeichnet, daß die Übersetzungsscheibe (36) mit dem Tragteil (48) horizontal schwenkbar verbunden ist.

10. Riementrieb nach einem oder mehreren der vorherigen Ansprüche, wobei das Gerät gegenüber dem Fahrzeug (10) eine Höhenstellung einnehmen kann, in der der Primärriemen (34) und der Sekundärriemen (38) in zwei zueinander parallelen horizontalen Ebenen umlaufen, dadurch gekennzeichnet, daß die Übersetzungsscheibe (36) derart am Gerät und Fahrzeug (10) angeschlossen ist, daß bei einem Anheben des Gerätes aus dieser Höhenstellung die Übersetzungsscheibe (36) in einer vertikalen Ebene in Richtung auf die den Primärriemen (34) antreibende Ausgangsscheibe (32) kippt und bei einem Absenken aus dieser Höhenstellung in entgegengesetzter Richtung.

## Claims

1. Belt drive for transmitting power from a vehicle (10) to an implement coupled to the vehicle (10) to allow vertical movement, with a primary belt (34), which may be driven by the power source of the vehicle (10), a secondary belt (38) driving at least one driving pulley (44) arranged on the implement and a jack sheave (36) connecting the primary belt (34) and secondary belt (38) to one another, wherein a sheave of said jack sheave (36) may be driven by the primary belt (34) and the secondary belt via a second sheave on the jack sheave (36), characterised in that at least the sheave of the jack sheave (36), around which the primary belt (34) circulates, may be shifted in planes which intersect the rotational plane of the driving pulley (44).

2. Belt drive according to Claim 1, wherein the jack sheave (36) is arranged to pivot on the implement, characterised in that the jack sheave (36) is arranged to tilt with its longitudinal axis on the implement.

3. Belt drive according to Claim 1, characterised in that the jack sheave (36) is pivotally connected to the vehicle (10).

4. Belt drive according to Claim 1, wherein the jack sheave (36) is arranged to pivot on the implement, characterised in that the jack sheave (36) is arranged to tilt with its longitudinal axis on the implement and is pivotally connected to the vehicle (10).

5. Belt drive according to one or some of the previous claims, characterised in that the jack sheave (36) is coupled to the implement and/or to the vehicle (10) via a sliding connection.

6. Belt drive according to one or some of the previous claims, wherein the primary belt (34) may be driven via an output sheave (32), characterised in that the jack sheave (36) is arranged between the output sheave (32) and the implement.

7. Belt drive according to one or some of the previous claims, wherein the implement is connected to the vehicle (10) to pivot around a horizontal axis (22), characterised in that the tilting connection (54) of the jack sheave (36) with the implement is provided in front or to the rear of the horizontal axis (22) and the pivotal connection (62) with the vehicle (10) is provided to the rear or in front of the horizontal axis (22).

8. Belt drive according to one or some of the previous claims, wherein the jack sheave (36) is arranged to rotate on a support member (48), characterised in that the support member (48) is connected to the implement to pivot vertically and has an arm member (56) which is slidably connected to the vehicle (10) to pivot vertically.

9. Belt drive according to Claim 8, characterised in that the jack sheave (36) is connected to the support member (48) to pivot horizontally.

10. Belt drive according to one or some of the previous claims, wherein the implement can assume a vertical position relative to the vehicle (10) in which the primary belt (34) and the secondary belt (38) circulate in two parallel horizontal planes, characterised in that the jack sheave (36) is coupled to the implement and vehicle (10) in such a way that when the implement is lifted from this vertical position, the jack sheave (36) tilts in a vertical plane in the direction of the output sheave (32) driving the primary belt (34) and is tilted in the opposite direction when the implement is lowered from said vertical position.

## Revendications

1. Dispositif d'entraînement à courroies pour la transmission de puissance d'un véhicule (10) à un appareil, qui est raccordé de manière à être déplaçable en hauteur sur le véhicule (10), et comportant une courroie principale (34), qui peut être entraînée à partir du véhicule (10), une courroie secondaire (38) qui entraîne au moins une poulie motrice (44) montée sur l'appareil et une poulie de démultiplication (36) qui relie entre elles la courroie principale (34) et la courroie secondaire (38), et dans lequel une poulie de la poulie démultiplicatrice (36) peut être entraînée par la courroie principale (34), et la courroie secondaire peut être entraînée par l'intermédiaire d'une seconde poulie située sur la poulie démultiplicatrice (36), caractérisé en ce qu'au moins la poulie de la poulie démultiplicatrice (36), autour de laquelle circule la courroie primaire (34), est déplaçable dans des plans, qui recoupent le plan de rotation de la poulie motrice (44).

2. Dispositif d'entraînement à courroies selon la revendication 1, dans lequel la poulie démultiplicatrice (36) est montée de manière à pouvoir basculer sur l'appareil, caractérisé en ce que la poulie démultiplicatrice (36) est disposée, avec son essieu longitudinal, de manière à pouvoir basculer sur l'appareil.

3. Dispositif d'entraînement à courroies selon la revendication 1, caractérisé en ce que la poulie démultiplicatrice (36) est reliée, de manière à pouvoir pivoter, au véhicule (10).

4. Dispositif d'entraînement à courroies selon la revendication 1, dans lequel la poulie démultiplicatrice (36) est montée de manière à pouvoir pivoter sur l'appareil, caractérisé en ce que la poulie démultiplicatrice (36) est disposée, avec son axe longitudinal, de manière à pouvoir basculer sur l'appareil et est reliée de manière à pouvoir pivoter au véhicule (10).

5. Dispositif d'entraînement à courroies selon une ou plusieurs des revendications précédentes, caractérisé en ce que la poulie démultiplicatrice (36) est reliée à l'appareil et/ou au véhicule (10) par l'intermédiaire d'une liaison en poussée.

6. Dispositif d'entraînement à courroies selon une ou plusieurs des revendications précédentes, dans lequel la courroie principale (34) peut être entraînée par l'intermédiaire d'une poulie de sortie (32), caractérisé en ce que la poulie démultiplicatrice (36) est disposée entre la poulie de sortie (32) et l'appareil.

7. Dispositif d'entraînement à courroies selon une ou plusieurs des revendications précédentes, dans lequel l'appareil est raccordé au véhicule (10) de manière à pouvoir pivoter autour d'un essieu horizontal (22), caractérisé en ce que le basculement (54) de la poulie démultiplicatrice (36) avec l'appareil est prévu en avant ou en arrière de l'essieu horizontal (22) et la liaison de pivotement (54) avec le véhicule (10) est prévue en arrière ou en avant de l'essieu horizontal (22).

8. Dispositif d'entraînement à courroies selon une ou plusieurs des revendications précédentes, dans lequel la poulie démultiplicatrice (36) est montée de manière à pouvoir tourner sur une partie de support (48), caractérisé en ce que la partie de support (48) est raccordée de manière à pouvoir pivoter verticalement et comporte un élément de bras (56), qui est raccordé de manière à être translatable et pouvoir pivoter verticalement sur le véhicule (10).

9. Dispositif d'entraînement à courroies selon la revendication 8, caractérisé en ce que la poulie démultiplicatrice (36) est reliée à la partie de support (48) de manière à pouvoir pivoter horizontalement.

10. Dispositif d'entraînement à courroies selon une ou plusieurs des revendications précédentes, dans laquelle l'appareil peut prendre, par rapport au véhicule (10), une position en hauteur, dans laquelle la courroie principale (34) et la courroie secondaire (38) circulent dans deux plans horizontaux parallèles entre eux, caractérisé en ce que la poulie démultiplicatrice (36) est raccordée à l'appareil et au véhicule (10) de telle sorte que, lors d'un soulèvement de l'appareil à partir de cette position en hauteur, la poulie démultiplicatrice (36) bascule dans un plan vertical, en direction de la poulie de sortie (32), qui entraîne la courroie principale (34), et, dans le cas d'un abaissement, bascule en sens opposé à partir de cette position en hauteur.
